Europäisches Patentamt

European Patent Office

Office européen des brevets

(19)

(11) Publication number: **0 164 293 B1**

# EUROPEAN PATENT SPECIFICATION

(45) Date of publication of patent specification: **22.05.91**    (51) Int. Cl.⁵: **H01R 35/02, H01R 9/09**

(21) Application number: **85401051.9**

(22) Date of filing: **29.05.85**

(54) **Flexible current feeding post.**

(30) Priority: **31.05.84 JP 111280/84**
         **18.12.84 JP 192545/84 U**

(43) Date of publication of application:
      **11.12.85 Bulletin  85/50**

(45) Publication of the grant of the patent:
      **22.05.91 Bulletin  91/21**

(84) Designated Contracting States:
      **DE FR GB**

(56) References cited:
      **WO-A-80/00553**
      **DE-A- 2 215 218**
      **FR-A- 1 521 469**

(73) Proprietor: **FUJITSU LIMITED**
      **1015, Kamikodanaka Nakahara-ku**
      **Kawasaki-shi Kanagawa 211(JP)**

(72) Inventor: **Ono, Izumi**
      **19-3, Motoyokoyamacho 1 chome**
      **Hachioji-shi Tokyo 192(JP)**
      Inventor: **Manago, Iwami**
      **5-2-7-403, Susukino 2 chome**
      **Midori-ku Yokohama-shi Kanagawa 227(JP)**
      Inventor: **Takayama, Haruo**
      **29-3-104, Kamitsuruma 4 chome**
      **Sagamihara-shi Kanagawa 228(JP)**
      Inventor: **Takahashi, Yasuo**
      **1-1-B-1117, Ogura Saiwai-ku**
      **Kawasaki-shi Kanagawa 211(JP)**

(74) Representative: **Descourtieux, Philippe et al**
      **CABINET BEAU de LOMENIE 55 rue**
      **d'Amsterdam**
      **F-75008 Paris(FR)**

**Description**

BACKGROUND OF THE INVENTION

The present invention relates to a current feeding post (hereinafter referred to as a feeding post) used for an electronic apparatus such as a communication equipment or a computer, to connect a bus plate or an earth plate to terminals of substrates on which electric circuits are formed. More particularly, it relates to a feeding post having a flexible structure allowing a tight contact between the end surfaces of the post and the terminals of the substrate so that the contact resistance between them is negligibly small.

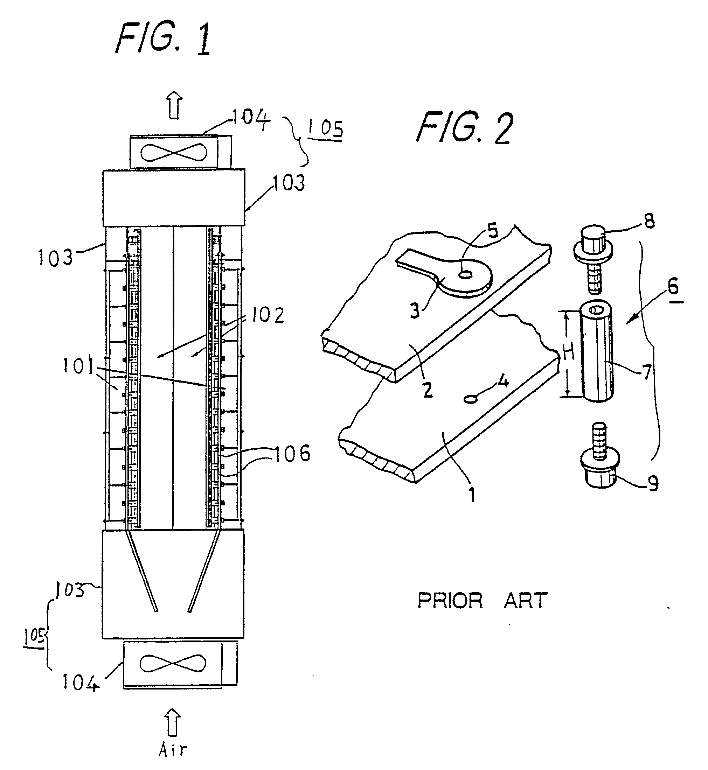

A modern electronic apparatus comprises a lot of electrical circuits, including power feeding circuit, which are mounted on several substrates, usually printed circuit boards. Fig. 1 is a side view illustrating a typical electronic storage apparatus, having unit modules which comprise several groups of ordinary circuits mounted on a printed circuit board : sub-system modules 101, power system modules 102 and cooling system modules 105 including cooling air ducts 103 and a cooling fan 104. In a unit module, the substrates are arranged in parallel to each other and power is supplied from power sources (not shown) to the respective circuits of the sub-system modules 101 through the power system modules 102. The connection between the sub-system modules 101 and the power system modules 102 is made by feeding posts 106 carrying high currents. Actually, the input terminals formed on a printed circuit board of the sub-system module 101 abut on the top surface of the corresponding feeding posts 106 and are tightly connected thereto, for instance by screwing to eliminate an undesirable voltage drop at the contact points.

Due to a strong demand for a high packing density of electronic elements, such as in a large capacity computer, a great number of circuits are packed on a printed circuit board, and electronic powers of various power voltage levels are applied to the circuits. In addition, power of a same voltage level is distributed to the circuits contained in the sub-system 101 through several feeding posts in order to supply the associated circuits on the printed circuit boards with uniformly divided currents. Therefore, a lot of feeding posts become necessary to supply the power to the circuits mounted on the printed circuit boards. Furthermore, on the printed circuit board, a sufficient area cannot be allocated to the feeding posts which are usually arranged in fringed regions of the printed circuit board, being aligned on lines.. As a result, the feeding posts are forced to have small dimensions. Thus, it is required that the connecting mechanism described above be more and more small-sized and accurate.

Fig. 2 is an exploded perspective view of an example of a connecting structure between a conventional bus plate 1 of a power system module and a corresponding circuit terminal 3 formed on a printed circuit board 2. Connecting holes 4 and 5 are formed respectively in the bus-plate 1 and in the center of the printed circuit terminal 3. A feeding post 6 comprises for instance a solid cylinder 7 having a predetermined height H, a pair of screws and a pair of washers. Using the feeding post 6, the bus plate 1 and the circuit (not shown) formed on the printed circuit board 2 are electrically connected to each other by screwing the screws 8 and 9, being spaced from each other by the solid cylinder 7. The distance between the bus plate 1 and the printed circuit board 2 is defined by the height H of the solid cylinder 7.

When, as mentioned above, the number of feeding posts mounted on a bus plate greatly increases, a higher accuracy is required for the height H of the solid cylinders and for the coincidence between the locations of the centers of corresponding feeding posts and connecting holes formed in the substrates. Otherwise, a mechanical distortion and a resulting stress of the substrates will arise after the assembling of the substrates which are tied to each other by the feeding posts.

Even though the mechanical assembly of the module is performed ideally without any distortion or stress of the substrates, a further deformation of the substrates occurs due to the non-uniform thermal expansion of the substrates during subsequent electrical operations. As well known, heat, such as heat loss of transistors, is generated in the circuit during its operation and the heat distribution is generally non-uniform, causing a non-uniform heat expansion of the substrates. In addition, the substrates are made of different materials having respective different thermal expansion coefficients peculiar to the materials. Thus, distortion problem is usually unavoidable in a prior art module assembly.

Then, the feeding post cannot be mounted exactly perpendicularly to the surface of the bus plate, leading to a reduction of the actual contacting area between the end surface of a feeding post and the contacting surface of the corresponding circuit terminal or bus plate. This produces an undesirable voltage drop, with resulting heat generation, at the poorly contacted circuit portion, badly affecting the circuit operation and causing thermal damage of the circuit portion in the vicinity of the contact.

Thus, it becomes rather difficult to obtain a good contact between feeding posts arranged on a printed circuit board and corresponding terminals of circuits mounted on an opposite printed circuit board, due to the fluctuation of the height H of the feeding posts and to the relative mislocation of the centers of the corresponding feeding posts and terminals. This problem being due to the rigidity of the connecting mechanism using prior art feeding posts for assembling the substrates to form a module, it has been found that when the rigidity is relaxed to some degree, the above problem can be eliminated.

## SUMMARY OF THE INVENTION

It is an object of the present invention to provide a current feeding post for assembling substrates into a circuit module, which is designed to have flexible structure allowing some tolerance for the dimensional accuracy of the post and associated parts.

It is another object of the present invention to provide a flexible feeding post which can be easily handled to assemble circuit modules in a mass-production line so as to reduce the fabrication cost.

It is a further object of the present invention to provide a flexible feeding post, by the use of which the quality and reliability of assembled substrates in a circuit module are increased.

As described above, the mechanical rigidity of the prior art module assembly should be relaxed. For the purpose, some flexible structure of feeding posts can be considered. For example, a feeding post having elastic deflection capacity in its axial direction can be realized by a structure comprising two cylinders fitting together coaxially, like a cylinder and a piston, and being slidable with respect to each other along their axis, and a coiled spring inserted between them. Another mechanism can be considered with a multi- or single-folded plate spring inserted between two cylinders slidable with respect to each other along an axis while being guided. However, since the space assigned to the feeding posts is small, as mentioned above, these structures are unsuitable for making feeding posts because of the difficulty of accommodation of the mechanism in the small space allotted, which would result in a rather low reliability of the mechanism.

In view of the above considerations, it is proposed according to the invention to provide a flexible current feeding post to be mounted on a first substrate for feeding an electric current to a second substrate of an electronic apparatus, said feeding post comprising :
- a conducting means having a predetermined electrical conductivity, and
- a bellows of electrical conductive material coaxially connected to said conducting means to form a feeding post so that one end of said current feeding post is capable of moving relatively to the other end of said current feeding post, thus allowing the both end surfaces of said current feeding post to contact with the corresponding contact surfaces of opposite members formed on said first and second substrates without any undesirable voltage drop at said contacting surfaces. A bellows of metal is more expensive than coiled springs or folded plate springs, but has a compact size, a balanced symmetrical construction, appropriate elasticity and deflection, and can be made of a material, such as a metal, having an electrical conductivity sufficient to pass high currents. As a result, a feeding post provided with a bellows show an elastic deformation capacity both axially and radially, even when its length is limited, and serves effectively to assemble a module comprising several substrates without suffering from the distortion of the substrates and from poor electrical contact between the feeding posts and corresponding circuit terminals or bus plate. In particular, the feeding posts according to the invention are particularly useful for a module assembly wherein a large number of feeding posts are required.

The current capacity of the feeding post according to the invention is determined by the thickness, diameter and resistivity of the material constituting the bellows. In order to meet the demand for higher current capacity of the feeding post, it is proposed to provide the bellows with a flexible current bypass of high conductive material, in order to increase the current capacity.

The features and advantages of the present invention will be more readily apparent from the reading of the following description which is made with reference to the accompanying drawings.

## BRIEF DESCRIPTION OF DRAWINGS

Fig. 1 is a side view of an electronic storage apparatus, illustrating the general arrangement of unit modules in the apparatus.

Fig. 2 is an exploded perspective view of a typical prior art feeding post.

Fig. 3 is a cross-sectional view illustrating the structure of an embodiment of the flexible current feeding post according to the present invention,

Fig. 4 is a partial cross-sectional view of an assembly of a module comprising substrates and a feeding post, illustrating how the feeding post according to the present invention is used.

Fig. 5 is a cross-sectional view of another embodiment of the flexible current feeding post according to the present invention, having a current by-pass member for increasing the current capacity of the feeding post.

Fig. 6 is a cross-sectional view of still another embodiment of the flexible current feeding post according to the invention having a current by-pass member of another type, for increasing the current capacity of the feeding post.

## DESCRIPTION OF PREFERRED EMBODIMENTS

Throughout the drawings, same reference numerals denote same or similar parts.

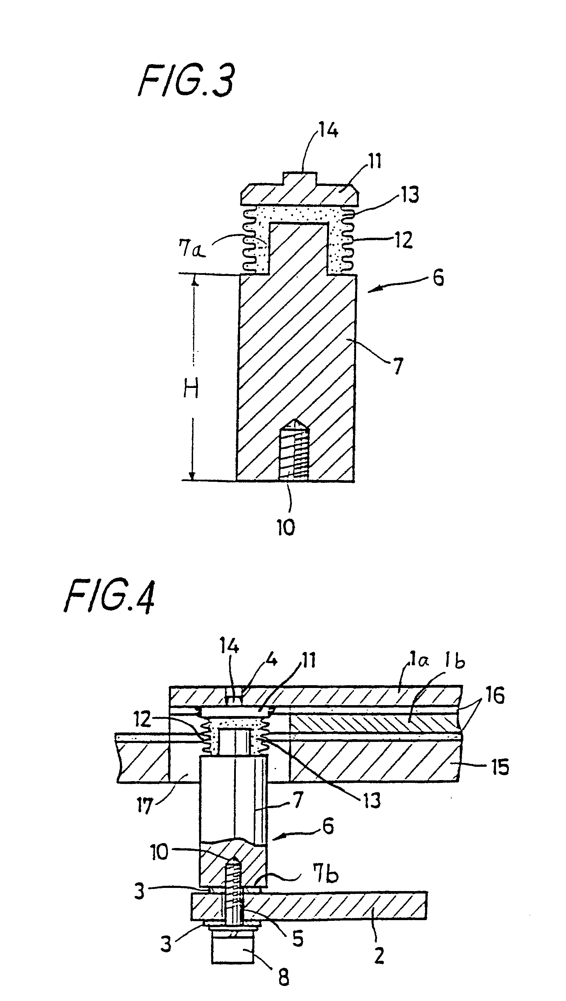

Fig. 3 is a cross-sectional view of an embodiment of the present invention. The feeding post comprises a solid cylinder 7, a conductive bellows 12 and a disk 11, which are coaxially joined in the recited order by soldering, for instance, as shown in Fig. 3, to form a flexible feeding post. The solid cylinder 7 has a coaxial cylindrical projection 7a at one end and a threaded hole 10 at the other end. The disk 11 has a small coaxial cylindrical projection 14. The bellows 12 is made of metal such as phosphor-bronze, pure copper, cupro-nickel (copper-nickel alloy), and stainless steel. These metals are selected depending on the current strength which the post should bear and the heat processing which the post may undergo. When a high current capacity is required, copper is suitable. If high temperature heat processing is to be applied during the assembly of the feeding post, stainless steel or phosphor-bronze is appropriate. In order to increase the current capacity of the feeding post, a conductive liquid 13 is sealed inside the bellows 12. For example, a low temperature solder can be used when the operating temperature of the feeding post exceeds the melting point of the solder. In this case, the material of the bellows 12 should be selected carefully not to be eroded or alloyed by the molten solder 13.

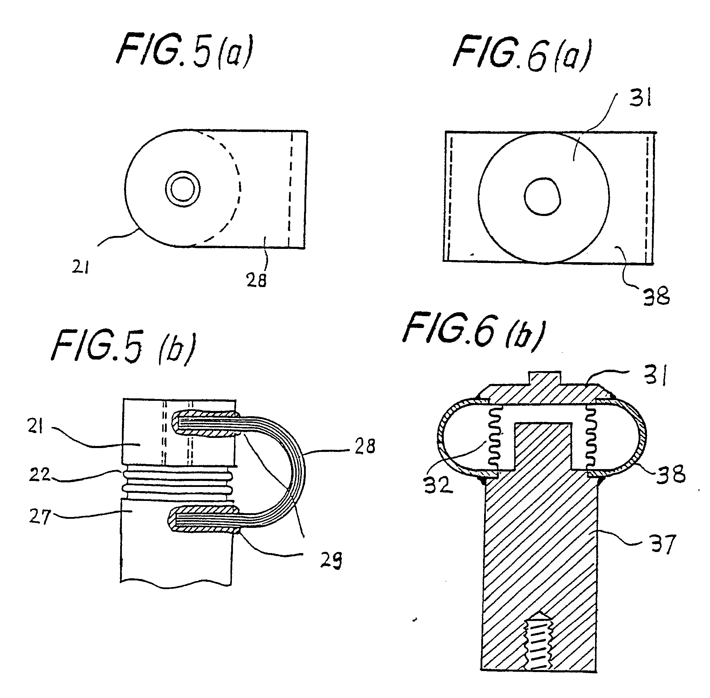

Fig. 4 is a partial cross-sectional view of an assembly of substrates making for a module, illustrating how the feeding post of Fig. 3 is used. The substrates are of two groups. The upper one consists of two bus plates 1a and 1b (copper plates for power supply), and an earth-plate 15 of aluminium having a heavy thickness, acting simultaneously as a mechanical main supporting plate for the module while giving the module its rigidity. The three plates, 1a, 1b and 15 are mutually insulated by two insulator plates 16, such as plastic sheets. The lower substrate is an ordinary printed circuit board 2. In the figure, the bus plate 1a is connected to the circuit terminal 3 formed on the printed circuit board 2. The small projection 14 of the disk 11 is inserted into a hole 4 opened in the bus-plate 1a for positioning the flexible posts 6. The flange of the disk 11 is soldered to the bus plate 1a as shown in Fig. 4. The opposite end of the feeding post 6 is fixed to the printed circuit board 2 by a screw 8 screwed into the threaded hole 10 through a hole 5 formed in the printed circuit board 2. In this case, even though the center lines of the hole 5 and of the threaded hole 10 may be somewhat out of alignment, this is compensated by the radial deformation of the bellows 12. Of course, the feeding post 6 is also adaptable to a deviation of the distance between the bus plate 1a and the printed circuit board 2 from the designed one. The insulator plates 16, the second bus-plate 1b and the earth plate 15 are kept apart from the feeding post 6 by a notch 17 formed in these plates. The end surface 7b of the solid cylinder 7 can contact tightly on its full contacting surface with the surface of the circuit terminal 3 by screwing the screw 8, because, due to the elastic deformation of the bellows 12, the surface 7b can change its inclination freely and fit tightly to the opposite surface. As a result, an undesirable voltage drop at the contact surface never occurs. Thanks to the flexible feeding post according to the present invention, the accuracy required regarding the height H of the solid cylinder 7, the positions of the holes 4 and 5 opened in the plates and other associated dimensions of relevant parts can be greatly reduced, bringing a considerable reduction in the fabrication cost of the module.

It is possible to use a bellows in which the end portion remote from the printed circuit board 2 is connected to a folded flexible cylindrical wall. It is then apparent that the disk 11 can be replaced by the above-mentioned portion of the bellows, reducing the number of parts of the flexible feeding post.

Of course, the disk 11 and the solid cylinder 7 can take various forms. For example two solid cylinders made of metal and of the same dimension coaxially connected to respective ends of a bellows can be used as a flexible feeding post.

Another embodiment having a high current capacity is illustrated in plan view of Fig. 5(a) and in cross-sectional view of Fig. 5(b). Generally, a bellows has a thin metal wall to keep its mechanical flexibility, resulting in a relatively low electrical conductivity. A feeding post having a bellows according to the present invention can however attain a high current capacity, such as 10 to 50 A, by providing the bellows with a by-pass means. The by-pass means should be designed to have sufficient flexibility not to reduce that of the feeding post itself. As shown in Fig. 5, a flexible current by-pass 28 is added to the feeding post 6 of Fig. 3 in parallel to the bellows. The flexible by-pass 28 is formed by thin laminated sheets of a metal of high conductivity, such as copper, to show a high conductivity and a flexibility sufficient to maintain the function of the bellows 22. The flexible by-pass 28 is fixed to a solid cylinder 27 and a thick disk 21 by a conventional solder 29, and by-passes the current applied to the bellows 22 the latter having its ends respectively secured to the cylinder 27 and the disk 21. A copper wire composed of a lot of fine copper strands is also usable in place of copper sheets.

Fig. 6 (a) and (b) are respectively a plan view and a cross-sectional view of a modified flexible by-pass 38 obtained from a thin copper plate by an ordinary punching method. A thin copper part having a C-shaped side view is provided between a solid cylinder 37 and a thick disk 31 and is secured thereto by soldering. The copper part 38 by-passes a bellows 32 having its ends secured respectively to the cylinder 37 and the disk 31. It is apparent for those skilled in the art that flexible by-pass means of other shapes could also be used for a feeding post according to the present invention.

## Claims

1. A current feeding post to be mounted on a first substrate for feeding an electric current to a second substrate of an electronic apparatus, comprising a conducting means (7) having predetermined electrical conductivity and characterized in that the post further comprises a bellows (12,22,32) of electrically conductive material coaxially connected to said conducting means, such that said feeding post is flexible so that one end of said current feeding post is capable of moving relatively to the other end of said current feeding post, thus allowing both end surfaces of said current feeding post to contact corresponding opposing contact surfaces formed on said first and second substrates without undesirable voltage drop at said contacting surfaces.

2. A current feeding post according to claim 1, characterized in that said conducting means comprises a solid cylinder (7,27,37) and a disk, (11,21,31) both of which are made of metal and connected to respective ends of the bellows.

3. A current feeding post according to claim 1, characterized in that said conducting means comprises two solid cylinders made of metal and connected to respective ends of the bellows.

4. A current feeding post according to claim 1, characterized in that said conducting means comprises a solid cylinder of metal and in that the bellows comprises an end portion which in use is remote from said second substrate.

5. A current feeding post according to any one of claims 1 to 3, characterized in that said bellows (22; 32) is by-passed by a flexible by-pass means (28; 38) of electrically conductive material having a sufficient flexibility so that the current carried by said bellows is by-passed without substantial reduction of the flexibility of said feeding post.

6. A current feeding post according to claim 5, characterized in that said flexible by-pass means (38) comprises a metal plate.

7. A current feeding post according to claim 5, characterized in that said flexible by-pass means (28) comprises a laminated layer of thin metal sheets.

8. A current feeding post according to claim 5, characterized in that said flexible by-pass means comprises fine strands of metal wire.

9. A current feeding post according to claim 5, characterized in that said flexible by-pass means comprises a low melting temperature metal disposed within said flexible bellows, and which is molten at the normal operating temperature of said flexible current feeding post.

10. A current feeding post according to any one of the preceding claims, characterized in that the material of said bellows is selected from copper, phosphor-bronze, copper-nickel alloy and stainless steel.

11. A current feeding post according to any one of claims 5 to 8, characterized in that the material of said flexible by-pass is copper.

## Revendications

1. Borne d'alimentation en courant destinée à être montée sur un premier substrat afin de fournir un courant électrique à un deuxième substrat d'un appareil électronique, comprenant un moyen de conduction (7) qui possède une conductivité électrique prédéterminée, et caractérisée en ce que la borne comprend en outre un soufflet (12, 22, 32) fait d'un matériau électriquement conducteur coaxialement connecté audit moyen de conduction, si bien que ladite borne d'alimentation est souple de façon qu'une extrémité de ladite borne d'alimentation en courant puisse se déplacer par rapport à l'autre extrémité de ladite borne d'alimentation en courant, ce qui permet que les deux surfaces terminales de ladite borne d'alimentation en courant soient en contact avec des surfaces de contact opposées correspondantes formées sur lesdits premier et deuxième substrats, sans chute de tension non souhaitable au niveau desdites surfaces de contact.

2. Borne d'alimentation en courant selon la revendication 1, caractérisée en ce que ledit moyen de conduction comprend un cylindre plein (7, 27, 37) et un disque (11, 21, 31), qui sont tous deux faits de métal et sont connectés aux extrémités respectives du soufflet.

3. Borne d'alimentation en courant selon la revendication 1, caractérisée en ce que ledit moyen de conduction comprend deux cylindres pleins faits de métal et connectés aux extrémités respectives du soufflet.

4. Borne d'alimentation en courant selon la revendication 1, caractérisée en ce que ledit moyen de conduction comprend un cylindre plein fait de métal et en ce que le soufflet comprend une partie terminale qui, en utilisation, est à l'opposé dudit deuxième substrat.

5. Borne d'alimentation en courant selon l'une quelconque des revendications 1 à 3, caractérisée en ce que ledit soufflet (22 ; 32) est dérivé par un moyen de dérivation souple (28 ; 38) fait d'un matériau électriquement conducteur qui possède une souplesse suffisante, si bien que le courant transporté par ledit soufflet est dérivé sans sensible réduction de la souplesse de ladite borne d'alimentation.

6. Borne d'alimentation en courant selon la revendication 5, caractérisée en ce que ledit moyen de dérivation souple (38) comprend une plaque de métal.

7. Borne d'alimentation en courant selon la revendication 5, caractérisée en ce que ledit moyen de dérivation souple (28) comprend une couche stratifiée de feuillets métalliques minces.

8. Borne d'alimentation en courant selon la revendication 5, caractérisée en ce que ledit moyen de dérivation souple comprend des fins brins de fil métallique.

9. Borne d'alimentation en courant selon la revendication 5, caractérisée en ce que ledit moyen de dérivation souple comprend un métal à basse température de fusion qui est disposé à l'intérieur dudit soufflet souple et qui est fondu à la température de fonctionnement normale de ladite borne souple d'alimentation en courant.

10. Borne d'alimentation en courant selon l'une quelconque des revendications précédentes, caractérisée en ce que le matériau dudit soufflet est choisi parmi le cuivre, le phosphorebronze, un alliage cuivre-nickel et l'acier inoxydable.

11. Borne d'alimentation en courant selon l'une quelconque des revendications 5 à 8, caractérisée en ce que le matériau de ladite dérivation souple est le cuivre.

## Ansprüche

1. Stromzuführungspfosten, der auf einem ersten Substrat montiert wird, um einem zweiten Substrat einer elektronischen Vorrichtung einen elektrischen Strom zuzuführen, mit leitenden Einrichtungen (7), die eine vorbestimmte elektrische Konduktivität haben und dadurch gekennzeichnet, daß der Pfosten ferner einen Balgen (12, 22, 32) aus elektrisch leitendem Material umfaßt, der koaxial mit der genannten leitenden Einrichtung so verbunden ist, daß der genannte Pfosten flexibel gemacht wird, so daß ein Ende des genannten Stromzuführungspfostens sich relativ zu dem anderen Ende des genannten Stromzuführungspfostens bewegen kann, so daß ermöglicht wird, daß beide Endoberflächen des genannten Stromzuführungspfostens die entsprechenden gegenüberliegenden Oberflächen, die auf den genannten ersten und zweiten Substraten ausgebildet sind, ohne einen unerwünschten Spannungsabfall an den genannten kontaktierenden Oberflächen, kontaktieren.

2. Stromzuführungspfosten nach Anspruch 1, dadurch gekennzeichnet, daß die genannte leitende Einrichtung einen festen Zylinder (7, 27, 37) und eine Scheibe (11, 21, 31) umfaßt, die beide aus Metall hergestellt und mit entsprechenden Enden des Balgens verbunden sind.

3. Stromzuführungspfosten nach Anspruch 1, dadurch gekennzeichnet, daß die genannten leitenden Einrichtungen zwei feste Zylinder umfassen, die aus Metall hergestellt und mit den entsprechenden Enden des Balgens verbunden sind.

4. Stromzuführungspfosten nach Anspruch 1, dadurch gekennzeichnet, daß die genannten leitenden Einrichtungen einen festen Zylinder aus Metall umfassen, und daß der Balgen einen Endabschnitt umfaßt, der bei Verwendung von dem genannten zweiten Substrat entfernt ist.

5. Stromzuführungspfosten nach einem der Ansprüche 1 bis 3, dadurch gekennzeichnet, daß der genannte Balgen (22; 32) durch eine flexible Nebenschlußeinrichtung (28; 38) aus elektrisch leitendem Material nebengeschlossen wird, welches eine hinreichende Flexibilität hat, so daß der Strom, der von dem Balgen geführt wird, ohne wesentliche Reduktion der Flexibilität des genannten Zuführungspfostens nebengeschlossen wird.

6. Stromzuführungspfosten nach Anspruch 5, dadurch gekennzeichnet, daß die genannte Nebenschlußeinrichtung (38) eine Metallplatte umfaßt.

7. Stromzuführungspfosten nach Anspruch 5, dadurch gekennzeichnet, daß die genannte flexible Nebenschlußeinrichtung (28) eine laminierte Schicht aus dünnen Metallblättern umfaßt.

8. Stromzuführungspfosten nach Anspruch 5, dadurch gekennzeichnet, daß die genannte flexible Nebenschlußeinrichtung feine Kabel aus Metalldrähten umfaßt.

9. Stromzuführungspfosten nach Anspruch 5, dadurch gekennzeichnet, daß die genannte flexible Nebenschlußeinrichtung Metall mit niedriger Schmelztemperatur umfaßt, das innerhalb des flexiblen Balgens angeordnet ist und das bei normaler Betriebstemperatur des genannten flexiblen Stromzuführunspfostens geschmolzen wird.

10. Stromzuführungspfosten nach einem der vorhergehenden Ansprüche, dadurch gekennzeichnet, daß das Material des genannten Balgens ausgewählt ist aus Kupfer, Phosphorbronze, Kupfernickellegierung und nichtrostendem Stahl.

11. Stromzuführungspfosten nach einem der Ansprüche 5 bis 8, dadurch gekennzeichnet, daß das Material des flexiblen Nebenschlusses Kupfer ist.

# FIG. 1

# FIG. 2

PRIOR ART

*FIG.3*

*FIG.4*

## FIG.5(a)

21

28

## FIG.5 (b)

21

22

27

28

29

## FIG.6(a)

31

38

## FIG.6 (b)

31

32

38

37